Europäisches Patentamt

European Patent Office

Office européen des brevets

(19)

(11) Numéro de publication: **0 234 988**
**B1**

(12) # FASCICULE DE BREVET EUROPEEN

(45) Date de publication du fascicule du brevet:
**12.04.89**

(51) Int. Cl.⁴: **F 02 K 9/34** // F16B11/00

(21) Numéro de dépôt: **87400139.9**

(22) Date de dépôt: **21.01.87**

(54) Chambre de combustion de propulseur et son procédé d'assemblage.

(30) Priorité: **22.01.86 FR 8600877**

(43) Date de publication de la demande:
**02.09.87 Bulletin 87/36**

(45) Mention de la délivrance du brevet:
**12.04.89 Bulletin 89/15**

(84) Etats contractants désignés:
**BE DE GB IT SE**

(56) Documents cités:
**CH-A- 471 321**
**FR-A- 2 045 201**
**FR-A- 2 230 490**

(73) Titulaire: **SOCIETE EUROPEENNE DE PROPULSION,
24 rue Salomon de Rothschild, F-92150 Suresnes (FR)**

(72) Inventeur: **Crapiz, Dino, 28, rue du Déhés, F-33160 Le
Haillan (FR)**

(74) Mandataire: **Hasenrader, Hubert et al, Cabinet BEAU DE
LOMENIE 55, rue d'Amsterdam, F-75008 Paris (FR)**

## Description

La présente invention concerne une chambre de combustion de moteur fusée du type comprenant deux fonds, le cas échéant partiellement ajourés, et reliés entre eux par une virole cylindrique.

Il a déjà été proposé de réaliser chacun des fonds et la virole intermédiaire à partir d'un matériau composite filamentaire, par exemple du type carbone/résine époxy, le bobinage de la virole cylindrique pouvant être effectué séparément de celui des fonds. Dans ce cas, la virole est réalisée sur des fonds préalablement bobinés ou sur un bloc de poudre équipé des fonds et servant de mandrin.

Bien que cette manière de procéder présente un certain nombre d'avantages, notamment en ce qui concerne la rigidité en flexion et la rigidité circonférentielle de la virole, elle ne permet pas de réaliser une architecture présentant une bonne tenue aux échauffements cinétiques élevés. En effet, pour ce type de réalisation de chambre de combustion, la nécessité d'assurer la compatibilité thermique avec la poudre entraîne une température de polymérisation de la résine relativement basse, ce qui limite la tenue aux échauffements cinétiques élevés. Un autre inconvénient de la chambre de combustion connue réside dans le fait que son architecture ne permet pas le positionnement et la fixation d'un fond à n'importe quel endroit de la face intérieure de la virole. En outre, si l'on utilise le bloc de poudre comme mandrin lors de la fabrication de la virole en composite filamentaire, la phase dangereuse de fabrication de la chambre de combustion est celle qui se passe en présence de ladite poudre et dure tout le temps du bobinage et de la polymérisation de ladite virole.

Un but de la présente invention est de supprimer ces inconvénients tout en gardant les avantages de l'art antérieur.

Ce but est atteint selon la présente invention du fait que chaque fond comprend une jupe faiblement conique dont la face extérieure est solidarisée sur au moins une partie de sa longueur à la face intérieure de la virole par l'intermédiaire d'une bague de liaison cylindro-conique fendue présentant une face extérieure cylindrique et, au moins en face de la jupe conique du fond, une face conique de même conicité que ladite jupe conique, l'assemblage des trois éléments à solidariser, c'est-à-dire fond, virole et bague, étant réalisé par collage.

Grâce à cette conception, les différents éléments constitutifs peuvent être soumis à des traitements thermiques sans qu'il soit nécessaire de tenir compte du comportement réactif du contenu de la chambre de combustion. Par ailleurs, la conception conforme à l'invention permet de réduire notablement l'étendue des zones d'ancrage ou de fixation des fonds sur la virole et, en conséquence, d'augmenter le volume disponible au remplissage par de la poudre.

L'invention concerne aussi un procédé d'assemblage de la chambre de combustion de moteur fusée comprenant une virole cylindrique et des fonds rapportés, tous réalisés par bobinage d'un matériau composite filamentaire avec une matrice de type résine.

Conformément à l'invention, ce procédé est caractérisé en ce que l'on réalise d'abord séparément la virole, les fonds présentant deux jupes coniques et deux bagues de liaison cylindro-conique, et l'on polymérise la résine de ces éléments avant leur assemblage, on enduit d'une colle la partie intérieure de la virole recevant un fond, la face extérieure de la jupe conique du fond et/ou la face conique et la face cylindrique de la bague cylindro-conique, on place le fond à l'endroit désiré de la virole et, pendant qu'on le maintient en place, on introduit la bague cylindro-conique dans l'espace entre la virole et la jupe conique du fond jusqu'à ce que la bague vienne en appui contre le fond et on procède à la polymérisation de la colle.

On comprendra aisément que cette manière de procéder permet non seulement de réaliser de façon indépendante tous les éléments de la chambre de combustion, et de tenir compte des exigences demandées à chacun desdits éléments, mais de favoriser le remplissage en poudre de la chambre de combustion par coulée à travers des ouvertures maximales égales au diamètre intérieur de la virole, et d'accroître la sécurité de fabrication, car le temps d'assemblage des éléments en présence de la poudre est réduit à la durée d'implantation des fonds dans la virole.

D'autres avantages et caractéristiques ressortiront de la description suivante d'un mode de réalisation de la chambre de combustion selon l'invention, description faite en référence aux dessins annexés sur lesquels:

— la figure 1 est une vue en élévation d'une coupe axiale à travers la chambre de combustion en cours d'assemblage;

— la figure 2 est une vue frontale de la bague de liaison cylindro-conique, et

— la figure 3 est une vue en élévation d'une coupe axiale à travers la bague de liaison selon la ligne III-III de la figure 2.

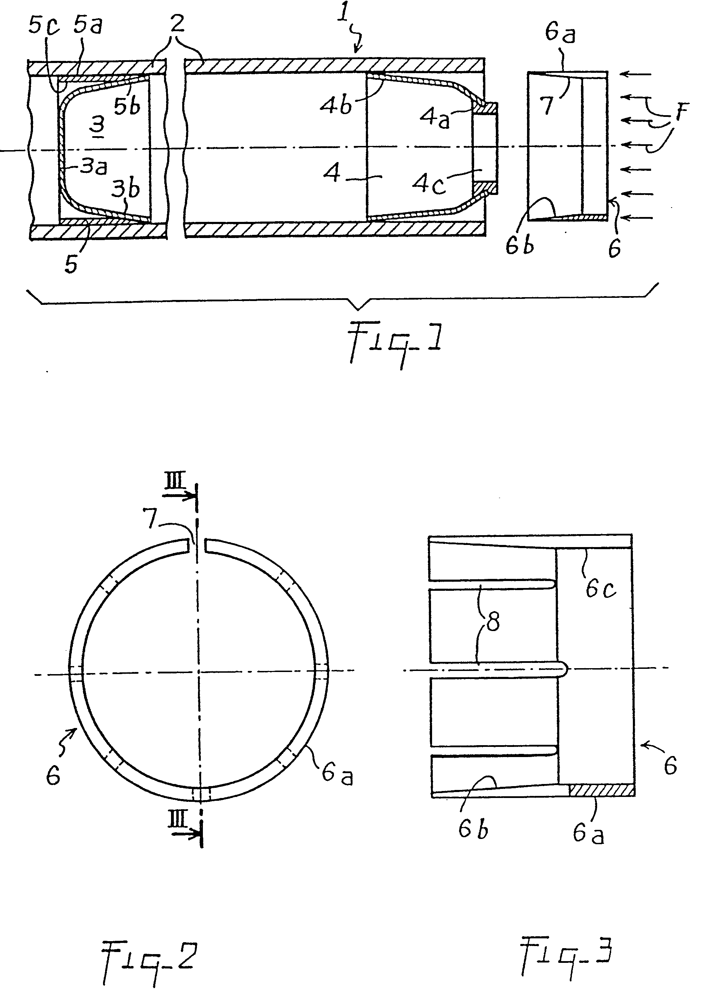

Telle que représentée sur la figure 1, la chambre de combustion 1 d'un moteur fusée comprend une virole cylindrique 2, au moins deux fonds 3, 4 et une bague de liaison 5, 6 pour chacun des fonds 3, 4.

La virole cylindrique 2 et les fonds rapportés 3, 4 sont fabriqués séparément en un matériau composite filamentaire bobiné qui peut être par exemple tu type carbone/résine époxy et sont polymérisés à chaud à des températures qui peuvent être supérieures à la température d'auto-inflammation de la poudre. Chaque fond 3, 4 comprend une embase pleine 3a ou ajourée 4a prolongée par une jupe conique 3b, 4b dont la conicité est comprise entre 0,2° et 5° (= demi-angle au sommet du cône). Le diamètre extérieur maximum du fond 3, 4, c'est-à-dire le diamètre extérieur de la grande base de la jupe conique 3b, 4b, est légèrement inférieur ou au plus égal au diamètre intérieur de la virole cylindrique 2. Le fond, par exemple 4, peut, le cas échéant, être constitué de deux parties différentes et présenter une jupe 4b raccordée à une embase 4a comportant un ou plusieurs ajours 4c.

La bague de liaison 5, 6 est de forme cylindro-conique et présente au moins une fente de séparation 7. Lorsqu'une seule fente 7 est prévue, il est avantageux que celle-ci s'étende sur toute la longueur de la bague 5, 6. Le pourtour extérieur 5a, 6a de la bague fendue 5, 6, destiné à venir en contact avec la face intérieure de la virole 2, est de forme cylindrique sur toute la longueur de la bague, tandis que le pourtour intérieur de la bague 5, 6 comprend au moins une partie conique 5b, 6b qui s'élargit en direction de l'extrémité interne de la bague. La conicité de la face conique 5b, 6b de la bague 5, 6 est identique à celle de la face extérieure de la jupe conique 3b, 4b du fond 3, 4 et, en conséquence, est également comprise entre 0,2° et 5° (= demi-angle au sommet du cône). Du côté externe, la bague de liaison 5, 6 peut présenter, sur sa face intérieure, une partie cylindrique 5c, 6c qui se raccorde à la partie conique 5b, 6b.

La longueur de la partie conique de la bague 5, 6 est généralement comprise entre 0,5 et 1,5 fois le diamètre de ladite bague. La bague de liaison 5, 6 est réalisée par bobinage en un matériau composite filamentaire, par exemple du type verre/résine époxy, la polymérisation de la résine étant effectuée à chaud à une température qui peut être supérieure à la température d'auto-inflammation de la poudre.

La bague de liaison cylindro-conique 5, 6 peut comporter plusieurs fentes 8 à la place ou en complément de la fente de séparation unique 7. Dans ce cas, les fentes 8 sont réparties de préférence uniformément sur tout le pourtour de la bague 5, 6, partent de l'extrémité la plus mince de celle-ci et traversent, parallèlement à l'axe de la bague 5, 6, au moins toute la partie conique 5b, 6b de celle-ci. Il est à noter que le périmètre extérieur de la bague fendue 5, 6, lorsque les bords des fentes 7 ou 8 sont en contact mutuel entre eux, est inférieur de 0,2 à 5 mm au périmètre intérieur de la virole cylindrique 2.

L'assemblage des différents éléments constitutifs de la chambre de combustion s'effectue de préférence de la manière suivante:

a) La surface extérieure de la jupe conique 3b, 4b du fond 3, 4 et la surface intérieure de la virole 2 sont enduites d'une colle (par exemple résine époxy) dans les zones où doit avoir lieu l'assemblage, ces zones n'étant pas nécessairement prévues aux extrémités de la virole 2.

b) Chaque fond 3, 4 est introduit, positionné et maintenu à sa place définitive à l'intérieur de la virole 2 au moyen d'un outillage de centrage non représenté.

Il est à noter que les opérations a) et b) peuvent être inversées. Autrement dit, l'enduction des surfaces en regard de la virole 2 et de la jupe correspondante 3b, 4b avec de la colle peut être effectuée après positionnement des fonds 3, 4 dans ladite virole 2.

c) La bague cylindro-conique fendue 5, 6 est enduite de colle sur ses faces extérieure 5a, 6a et intérieure dans sa partie conique 5b, 6b.

d) La bague enduite de colle est ensuite insérée dans l'espace compris entre la jupe conique 3b, 4b et la face intérieure de la virole, un effort de poussée F étant appliqué sur l'exrémité extérieure de la bague jusqu'à ce que soit atteint le degré de serrage désiré.

e) L'ensemble est maintenu en place pendant la polymérisation de la colle qui peut se produire à froid ou à chaud selon la nature de la colle.

f) Les outillages de maintien sont enlevés et éventuellement les bavures de colle sont éliminées.

La poudre peut être introduite dans la chambre de combustion soit après la mise en place d'un premier fond, par exemple 3, et avant celle du deuxième fond 4, soit après la mise en place des deux fonds 3, 4, à condition que l'un d'eux, par exemple 4, soit ajouré.

Deux chambres de combustion ont été réalisées selon le procédé de l'invention avec:

— une virole 2 constituée d'un matériau composite filamentaire bobiné carbone/résine époxy, ayant un diamètre intérieur de 158 mm, une longueur de 1700 mm et une épaisseur de 4 mm,

— deux fonds 3, 4 constitués d'un matériau filamentaire bobiné carbone/résine époxy et comportant des jupes 3b, 4b d'une conicité de 1°,

— deux bagues cylindro-coniques fendues 5, 6 constituées d'un matériau composite filamentaire bobiné verre/résine époxy avec 1° de conicité sur la face conique intérieure 5b, 6b,

— de la colle en résine époxy.

Une fois l'assemblage réalisé, la colle a été polymérisée à chaud. Deux essais à l'éclatement hydraulique ont été menés à 344 et 346 bars respectivement, sans endommagement de la liaison fond-virole-bague, jusqu'à la rupture au niveau du chignon de liaison avec l'embase. Dans le premier cas, la longueur de la bague 5, 6 était de 170 mm et, dans le deuxième cas, de 150 mm, tandis que la longueur d'ancrage du fond (partie du fond en contact avec la virole et/ou la bague) dans la virole était de 200 et de 110 mm respectivement. Cela montre que l'on peut réduire la longueur des zones d'ancrage d'une façon non négligeable et augmenter en même temps le taux de remplissage de la chambre de combustion.

**Revendications**

1. Chambre de combustion de moteur fusée du type comprenant deux fonds (3, 4), reliés entre eux par une virole cylindrique (2), chacun des fonds (3, 4) et la virole intermédiaire (2) étant réalisés à partir d'un matériau composite filamentaire, caractérisée en ce que chaque fond (3, 4) comprend une jupe faiblement conique (3b, 4b) dont la face extérieure est solidarisée sur au moins une partie de sa longueur à la face intérieure de la virole (2) par l'intermédiaire d'une bague de liaison cylindro-conique fendue (5), présentant une face extérieure cylindrique (5a et 6a) et, au moins en face de la jupe conique (3b, 4b) du fond (3, 4), une face intérieure conique (5b, 6b) de même conicité que ladite jupe conique (3b, 4b), l'assemblage des trois éléments à solidariser, c'est-à-dire le fond (3, 4), la virole (2) et la bague (5, 6), étant réalisé par collage.

2. Chambre de combustion selon la revendication 1, caractérisée en ce que la conicité de la jupe conique (3b, 4b) du fond (3, 4) et celle de la bague de liaison (5, 6) sont comprises entre 0,2° et 5° (demi-angle au sommet du cône).

3. Chambre de combustion selon l'une des revendications 1 et 2, caractérisée en ce que la bague de liaison (5, 6) comporte au moins une fente de séparation (7) s'étendant sur toute la longueur de ladite bague.

4. Chambre de combustion selon l'une des revendications 1 à 3, caractérisée en ce que la bague de liaison comporte plusieurs fentes (8) partant de l'extrémité la plus mince de celle-ci et traversant, parallèlement à l'axe de la bague, au moins toute la partie à face intérieure conique (5b, 6b) de celle-ci.

5. Chambre de combustion selon l'une des revendications 1 à 4, caractérisée en ce que le périmètre extérieur de la bague fendue (5, 6), lorsque les bords des fentes (7, 8) sont en contact mutuel entre eux, est inférieur de 0,2 à 5 mm au périmètre intérieur de la virole cylindrique (2).

6. Procédé d'assemblage d'une chambre de combustion de moteur fusée (1) comprenant une virole cylindrique (2) et des fonds rapportés (3, 4), tous réalisés en matériau composite à matrice résine, caractérisé en ce que l'on réalise d'abord séparément la virole (2), les fonds (3, 4) présentant deux jupes coniques (3b, 4b), et deux bagues de liaison cylindro-conique (5, 6) et on polymérise la résine de ces éléments avant leur assemblage, on enduit d'une colle la partie intérieure de la virole (2) recevant un fond (3, 4), la face extérieure de jupe conique (3b, 4b) du fond et/ou la face intérieure conique (5b, 6b) et la face extérieure cylindrique (5a, 6a) de la bague cylindro-conique (5, 6), on place le fond (3, 4) à l'endroit désiré de la virole (2) et, pendant qu'on le maintient en place, on introduit la bague cylindro-conique (5, 6) dans l'espace entre la virole (2) et la jupe conique (3b, 4b) du fond jusqu'à ce que la bague (5, 6) vienne en appui contre le fond et on procède à la polymérisation de la colle.

**Patentansprüche**

1. Brennkammer für einen Treibsatz vom Typ mit zwei Böden (3, 4), die miteinander durch einen zylindrischen Ring oder Mantel (2) verbunden sind, wobei jeder Boden (3, 4) und der Zwischenring (2) aus einem Filament-Verbundwerkstoff gebildet sind, dadurch gekennzeichnet, dass jeder Boden (3, 4) eine leicht konische Schürze (3b, 4b) aufweist, deren Aussenseite wenigstens auf einem Bereich ihrer Länge mit der Innenseite des Rings (2) mittels eines zylindro-konischen geschlitzten Verbindungsringes (5) verbunden ist, der eine zylindrische Aussenseite (5a und 6a) und wenigstens gegenüber der konischen Schürze (3b, 4b) des Bodens (3, 4) eine konische Innenseite (5b, 6b) von gleicher Konizität wie die konische Schürze (3b, 4b) aufweist, wobei die Anordnung der drei zu verbindenden Elemente, das heisst, des Bodens (3, 4), des Mantels (2) und des Rings (5, 6), durch Kleben verwirklicht ist.

2. Brennkammer nach Anspruch 1, dadurch gekennzeichnet, dass die Konizität der konischen Schürze (3b, 4b) und jene des Verbindungsrings (5, 6) zwischen 0,2° und 5° (halber Kegelwinkel) beträgt.

3. Brennkammer nach einem der Ansprüche 1 oder 2, dadurch gekennzeichnet, dass der Verbindungsring (5, 6) wenigstens einen Trennschlitz (7) aufweist, der sich über die gesamte Länge des Ringes erstreckt.

4. Brennkammer nach einem der Ansprüche 1 bis 3, dadurch gekennzeichnet, dass der Verbindungsring mehrere Schlitze (8) aufweist, die vom schlanksten Ende des Rings ausgehen und parallel zur Achse des Ringes wenigstens dessen gesamten Bereich der konischen Innenseite (5b, 6b) durchqueren.

5. Brennkammer nach einem der Ansprüche 1 bis 4, dadurch gekennzeichnet, dass der Aussenumfang des geschlitzten Rings (5, 6), während die Schlitzränder (7, 8) in gegenseitigem Kontakt untereinander sind, geringer ist als 0,2 bis 5 mm bezüglich des Innenumfangs des zylindrischen Mantels (2).

6. Verfahren zum Zusammenbau einer Brennkammer für einen Treibsatz (1), die einen zylindrischen Mantel (2) und zusammengeführte Böden (3, 4) aufweist, welche alle aus einem Verbundwerkstoff mit Harzmatrix gebildet sind, dadurch gekennzeichnet, dass zunächst der Mantel (2), die zwei konische Schürzen (3b, 4b) aufweisenden Böden (3, 4) und zwei zylindro-konische Verbindungsringe (5, 6) getrennt hergestellt werden, und das Harz dieser Elemente vor ihrem Zusammenführen polymerisiert wird, der innere Bereich des Mantels (2), der einen Boden (3, 4) aufnimmt, mit einem Klebstoff überzogen wird, die Aussenseite der konischen Schürze (3b, 4b) des Bodens und/oder die konische Innenseite (5b, 6b) und die zylindrische Aussenseite (5a, 6a) des zylindrokonischen Rings (5, 6) mit einem Klebstoff überzogen wird, der Boden (3, 4) an den gewünschten Ort des Mantels (2) plaziert wird, und, während er an seinem Platz gehalten wird, der zylindro-konische Ring (5, 6) in den Raum zwischen dem Mantel (2) und der konischen Schürze (3b, 4b) des Bodens eingeführt wird, bis der Ring (5, 6) in Anschlag gegen den Boden kommt, und dass die Polymerisation des Klebstoffs fortgesetzt wird.

**Claims**

1. Combustion chamber for rocket motor of the type comprising two domes (3, 4), interconnected by a cylindrical shell (2), each of said domes (3, 4) and the intermediate shell (2) being produced from a filamentary composite material, characterized in that each dome (3, 4) comprises a slightly conical skirt (3b, 4b) of which the external face is joined over at least part of its length to the inner face of the shell (2), via a split cylindro-conical connection ring (5), presenting a cylindrical external face (5a and 6a), and at least opposite the conical skirt (3b, 4b) of the dome (3, 4), one inner conical face (5b, 6b) having the same conicity as said conical skirt (3b, 4b), the assembling of the three elements to be connected, i.e. dome (3, 4), shell (2) and ring (5, 6), being achieved by adhesive bonding.

2. Combustion chamber according to claim 1, characterized in that the conicity of the conical skirt (3b, 4b) of the dome (3, 4) and that of the connection ring (5, 6) is between 0.2° and 5° (cone half-angle).

3. Combustion chamber according to one of claims 1 and 2, characterized in that the connection ring (5, 6) comprises at least one separation slot (7) extending throughout the length of said ring.

4. Combustion chamber according to one of claims 1 to 3, characterized in that the connection ring comprises a plurality of slots (8) starting from the thinner end of said ring and traversing, in parallel to the axis of said ring, at least all the part having a conical inner face (5b, 6b) of said ring.

5. Combustion chamber according to one of claims 1 to 4, characterized in that the external perimeter of the split ring (5, 6), when the edges of the slots (7, 8) are contacting, is less by 0.2 to 5 mm than the internal perimeter of the cylindrical shell (2).

6. Method for assembling a combustion chamber of a rocket motor (1) comprising a cylindrical shell (2) and separate domes (3, 4), all of which are produced in composite material with a resin matrix, characterized in that said method consists in first producing separately the shell (2), the domes (3, 4) with their two conical skirts (3b, 4b), and two cylindro-conical connection rings (5, 6), and in polymerizing the resin of these elements before assembling them, then in coating with an adhesive material the inside part of the shell (2) which will receive a dome (3, 4), the external face of the conical skirt (3b, 4b) of the dome and/or the conical internal face (5b, 6b) and the cylindrical external face (5a, 6a) of the cylindro-conical ring (5, 6), in placing the dome (3, 4) in the part of the shell (2) provided to this effect, and, while said ring is held in position, in introducing the cylindro-conical ring (5, 6) into the space between the shell (2) and the conical skirt (3b, 4b) of the dome until the ring (5, 6) reaches to, and presses against, the dome, then in proceeding to the polymerization of the adhesive.

Fig-1

Fig-2

Fig-3

7